**Europäisches Patentamt**

**European Patent Office**

**Office européen des brevets**

(19)

(11) Publication number : **0 424 920 B1**

# EUROPEAN PATENT SPECIFICATION

(12)

(45) Date of publication of patent specification :
**13.12.95 Bulletin 95/50**

(51) Int. Cl.⁶ : **H04N 1/40**

(21) Application number : **90120425.5**

(22) Date of filing : **24.10.90**

(54) Method of and apparatus for obtaining tone curve

(30) Priority : **25.10.89 JP 277396/89**

(43) Date of publication of application :
**02.05.91 Bulletin 91/18**

(45) Publication of the grant of the patent :
**13.12.95 Bulletin 95/50**

(84) Designated Contracting States :
**DE FR GB**

(56) References cited :
**EP-A- 0 255 949**
**EP-A- 0 322 879**
**WO-A-88/10043**
**GB-A- 2 182 821**
**GB-A- 2 207 023**

(73) Proprietor : **Dainippon Screen Mfg. Co., Ltd.**
**1-1, Tenjinkitamachi**
**Teranouchi-Agaru 4-chome**
**Horikawa-Dori**
**Kamikyo-ku Kyoto 602 (JP)**

(72) Inventor : **Kishida, Yoshihiro, Dainippon**
**Screen Mfg. Co. Ltd.**
**1-1, Tenjinkitamachi,**
**Teranouchi-Agaru 4-chome**
**Horikawa Dori, Kamikyo-ku, Kyoto (JP)**

(74) Representative : **Goddar, Heinz J., Dr. et al**
**FORRESTER & BOEHMERT**
**Franz-Joseph-Strasse 38**
**D-80801 München (DE)**

EP 0 424 920 B1

## Description

BACKGROUND OF THE INVENTION

Field of the Invention

The present invention relates to a method of and an apparatus for obtaining a tone curve or a tone conversion curve used for executing tone conversion of image data which are obtained by reading an original image.

Description of Prior Art

In an image processor such as a color scanner, tone conversion is conducted on image data which are obtained by reading an original image by photoelectric scanning thereof, thereby a recorded image having required tone expression being obtained. For such tone conversion, it is not preferable to employ a fixed tone curve but to employ a tone curve in accordance with the characteristic of the original image to be processed. However, for producing an appropriate tone curve for each original, the structure of the image processor is liable to become complicated to some extent.

Efforts have been made to develop a technique for obtaining tone conversion or gradation conversion tables in accordance with the characteristics of each original with a simple structure. For example, in the technique disclosed in Japanese Patent Application Laid-Open JP-A-6342575 (EP-A-0 255 949) (1988), a required tone curve is obtained by combining a tone curve determined according to a density histogram of the whole image and a reference tone curve prepared in advance at an arbitrary combination ratio.

However, for particularly appropriate expression of the tone of a partial region in the original image, the tone curve produced by the aforesaid technique is sometimes inadequate. When the color tone of the partial image region whose tone is desired to be expressed appropriately is widely different from the color tone of the whole image, the tone expression of the partial image region might not meet the requirement, because the tone curve is obtained according to the density histogram of the whole image in the aforesaid technique.

SUMMARY OF THE INVENTION

The present invention is directed to a method of obtaining a tone curve employable for converting a gradation of an image.

According to the present invention, the method comprises the steps of: (a) obtaining a plurality of reference tone curves for a plurality of gradation characters, respectively; (b) designating a plurality of image regions on the original image; (c) selecting respective reference tone curves for the image regions designated among the plurality of reference tone curves; (d) designating weight values for the respective reference tone curves; and (e) combining the respective reference tone curves in cooperation with the weight values to thereby obtain the tone curve.

The weight values may be arbitrarily designated, or alternately, they may be determined on the basis of the ratio between respective areas of the plurality of image regions. The plurality of image regions can be designated by moving a cursor on the image displayed.

Preferably, the plurality of reference tone curves are prepared for various types of objects appearing on images. The designation of respective reference tone curves for the plurality of image regions may be attained by selecting the types of objects appearing on the image.

In an aspect of the present invention, the respective tone curves for the plurality of image regions are obtained on the basis of the statistical distributions of density on the plurality of image regions.

The present invention also provides an apparatus employable for conducting the present method.

Since the tone curve for converting the gradation of the image is obtained by combining reference tone curves assigned to respective image regions with each other, the reference tone curve for a selected image region can be reflected to the tone curve at a desired weight.

Accordingly, an object of the present invention is to provide a method of and an apparatus for obtaining a tone curve suitable for expressing the gradation of a selected image region more appropriately than other image regions.

These and other objects, features, aspects and advantages of the present invention will become more apparent from the following detailed description of the present invention when taken in conjunction with the accompanying drawings.

BRIEF DESCRIPTION OF DRAWINGS

Fig. 1 is a schematic structural diagram showing a scanner system according to a preferred embodiment of the present invention;

Fig. 2 is a flow chart showing the procedure of the preferred embodiment;

Fig. 3 shows an example of tone curves;

Fig. 4 shows an example of a menu table;

Fig. 5 shows an example of an original image;

Fig. 6 is a schematic structural diagram showing a scanner according to another preferred embodiment of the present invention;

Fig. 7 is a flow chart showing the procedure of the preferred embodiment of Fig. 6; and

Fig. 8 is a flow chart showing the procedure according to still another preferred embodiment of the present invention.

DESCRIPTION OF PREFERRED EMBODIMENTS

A. Schematic Structure of System

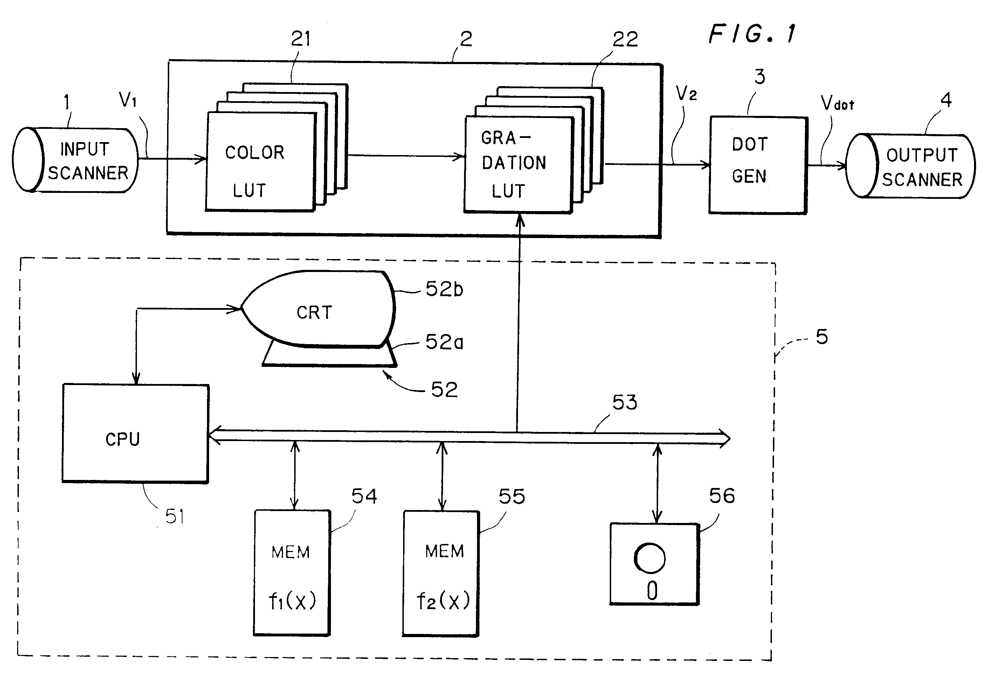

Fig. 1 is a schematic structural diagram of a color scanner system according to a preferred embodiment of the present invention. In Fig. 1, an input scanner 1 scans an original to read an image thereof and supplies an image signal $V_1$ to an image processing circuit 2. The image processing circuit 2 comprises a color computation lookup table 21 for executing color computation by which BGR components of the image signal $V_1$ are converted into YMCK components, a gradation lookup table (hereinafter referred to as a gradation LUT) 22 for executing tone conversion, and the like. An image signal $V_2$ obtained by the image processing circuit 2 is supplied to a dot generator or a halftone dot signal generating circuit 3 to be converted into a halftone dot signal $V_{dot}$ therein. The halftone dot signal $V_{dot}$ is supplied from the dot generator 3 to an output scanner 4, which exposes a photosensitive film based on this signal and records each color-separated image thereon.

The scanner system further comprises a tone curve setting device 5 for setting an appropriate tone curve in accordance with the character of the original image. The tone curve setting device 5 comprises a CPU 51, a console 52 which is connected to the CPU 51 and has a keyboard 52a and a CRT 52b, and two memories 54 and 55 connected to the CPU 51 by way of a CPU bus 53. Data can be transmitted between the CPU 51 and a floppy disc 56 by way of the CPU bus 53. The tone curve which is obtained by the tone curve setting device 5 is supplied in the form of a lookup table by way of the CPU bus 53 to the gradation LUT 22 to be stored therein.

B. Operation of the System

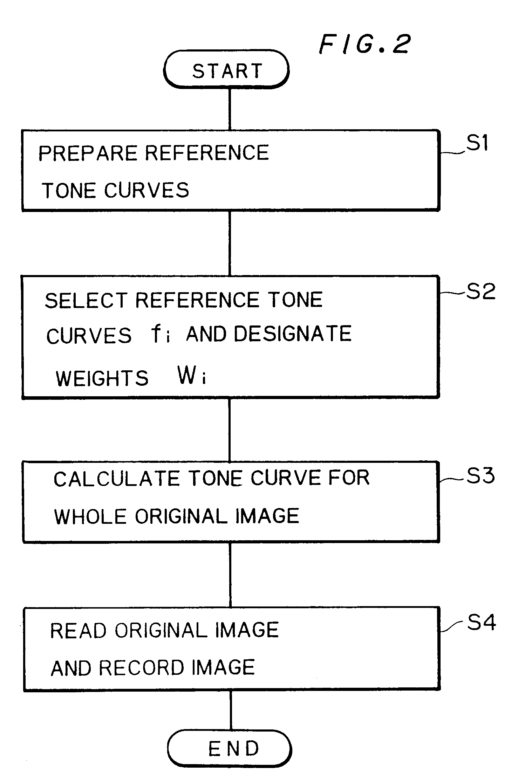

Fig. 2 is a flow chart showing the procedure according to the preferred embodiment of the present invention.

In the process step S1, a plurality of reference tone curves for different tone characteristics are prepared and stored in the floppy disc 56.

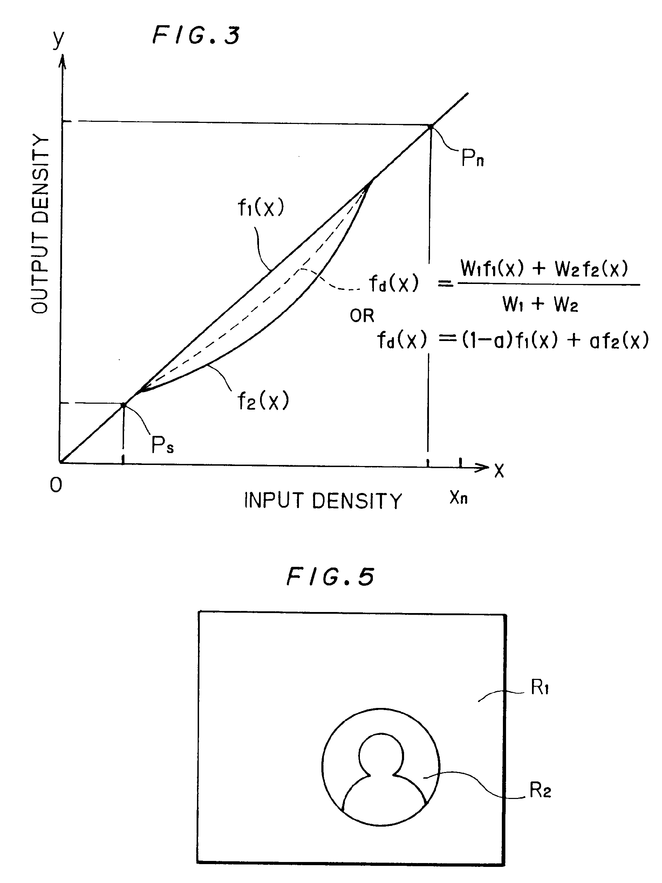

Fig. 3 shows an example of the reference tone curves. In Fig. 3, the abscissa indicates an input density (or a density before the tone conversion) x and the ordinate indicates an output density (or a density after the tone conversion) y. Two reference tone curves $f_1(x)$ and $f_2(x)$ are shown in Fig. 3.

The tone curves are in general adjustable to form various shapes between a shadow point $P_s$ and a highlight point $P_h$, which shapes express tone reproduction characteristics. As reference tone curves, prepared are a plurality of curves in accordance with various tone characteristics of the images having different image pictures (portraits, machines, landscapes, etc.) and different tones (high keys, low keys, etc.).

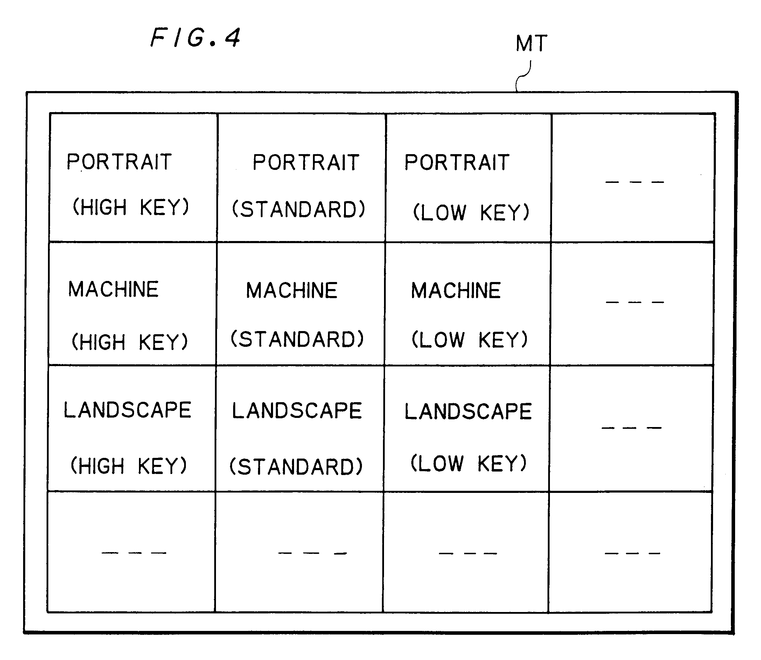

In the process step S2, an operator observes the original image on which the tone conversion is to be conducted, and thereby specifies a plurality of reference tone curves $f_i$ to be employed for setting the tone curve appropriate to the original image and the values of weights $W_i$ for these reference tone curves, respectively. Fig. 4 shows an example of a menu table MT employed for specifying the reference tone curves to be employed. In the menu table MT, items for different image pictures (portraits, machines, landscapes, etc.) and different tones (high keys, low keys, etc.) are arranged. The menu table is displayed, for example, on the CRT 52b. The operator moves a cursor to select a plurality of items corresponding to the contents of the original image, to thereby select the reference tone curves $f_i$ in accordance with the tone characteristics of the items being selected. The weights $W_i$ for the respective reference tone curves are inputted by means of the keyboard 52a.

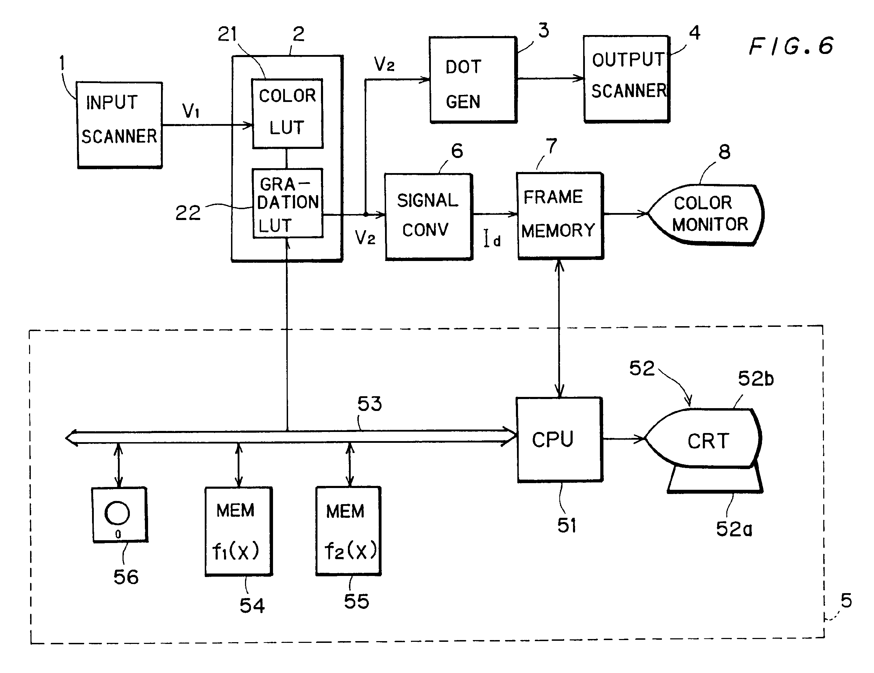

Fig. 5 shows an example of the original image. For simplification, the original image is supposed to be separable into two: a background image region $R_1$ and a main subject image region $R_2$ which is located in the background region $R_1$ and has weak gradation. The regions $R_1$ and $R_2$ may be designated by tracing the boundary between them with a cursor on the CRT 52b. A first reference tone curve $f_1(x)$ suited to the background region $R_1$ and a second reference tone curve $f_2(x)$ suited to the main subject region $R_2$ are supposed to be selected. The data indicating the reference tone curves $f_1(x)$ and $f_2(x)$ are read out from the floppy disc 56 to be stored in the memories 54 and 55 respectively. The weights $W_1$ and $W_2$ for the reference tone curves $f_1(x)$ and $f_2(x)$ are designated by the operator through the console 52.

In the process step S3, the CPU 51 calculates the tone curve $f_d(x)$ appropriate to the original image according to the following equation:

$$f_d(x) = \{W_1 f_1(x) + W_2 f_2(x)\}/(W_1 + W_2) \quad (1)$$

where $0 \leqq x \leqq x_n$, $x_n$ designating the maximum value of the input density.

Instead of designating the weights $W_1$ and $W_2$ in the process step S2, one tone curve (for example, $f_1(x)$) to which processing priority is given between two reference tone curves $f_1(x)$ and $f_2(x)$ and the weight $W_2 = a$ for the other tone curve $f_2(x)$ may be designated. In this case, the tone curve $f_d(x)$ appropriate to the original image is calculated according to the following equation instead of Equation (1):

$$f_d(x) = (1 - a)f_1(x) + af_2(x) \quad (2)$$

where $0 < a < 1$.

In Fig. 3, the tone curve $f_d(x)$ calculated according to Equation (1) or (2) is shown by a broken line. The tone curve $f_d(x)$ is an average of the first and second reference tone curves $f_1(x)$ and $f_2(x)$ weighted with the respective weights $W_1$ and $W_2$, as is understood from Equation (1). By varying the values of the weights $W_1$ and $W_2$, the tone curve $f_d(x)$ having the tone expression characteristic approximate to either the first or second reference tone curve $f_1(x)$ or $f_2(x)$ can be obtained. For example, in the case of expressing the tone of the background region $R_1$ more appropriately than the main objective region $R_2$, the weight $W_1$ for the first reference tone curve $f_1(x)$ is set to a large value and the weight $W_2$ or $\underline{a}$ for the second reference tone curve $f_2(x)$ is set to a small value.

The first and second reference tone curves $f_1(x)$ and $f_2(x)$ may be different for each color component Y, M, C and K to calculate the appropriate tone curve $f_d(x)$ for each color component.

After the tone curve $f_d(x)$ which expresses the tone of a partial image region in the original is calculated by the CPU 51, data of the tone curve $f_d(x)$ is supplied from the CPU 51 to the gradation LUT 22 to be stored therein in the form of a lookup table.

In the process step S4, the original is set to the input scanner 1 to read the image thereof. The image signal $V_1$ is processed by the image processing circuit 2 and the dot generator 3, and color-separated halftone dot images for Y, M, C and K are recorded on the phtosensitive film by the output scanner 4. At this time, the tone conversion is conducted through the tone curve $f_d(x)$ stored in the gradation LUT 22, whereby the color-separated images having the required tone characteristic is obtained.

The process may be modified such that the image obtained through the tone conversion is displayed on a monitor display and the operator changes the choise of the reference tone curves and the weights while obserbing the image displayed.

## 6. Other Preferred Embodiments

Fig. 6 is a schematic structural diagram of a color scanner system according another preferred embodiment of the present invention. The scanner system comprises a signal converter 6, a frame memory 7 and a color monitor 8 in addition to the elements of the scanner system in Fig. 1. The signal converter 6 converts the image signal $V_2$ outputted from the image processing circuit 2 into luminance data $I_d$ for each pixel. The luminance data $I_d$ are stored in the frame memory 7 and, as required, are supplied from the frame memory 7 to the color monitor 8 to display the original image on the color monitor 8.

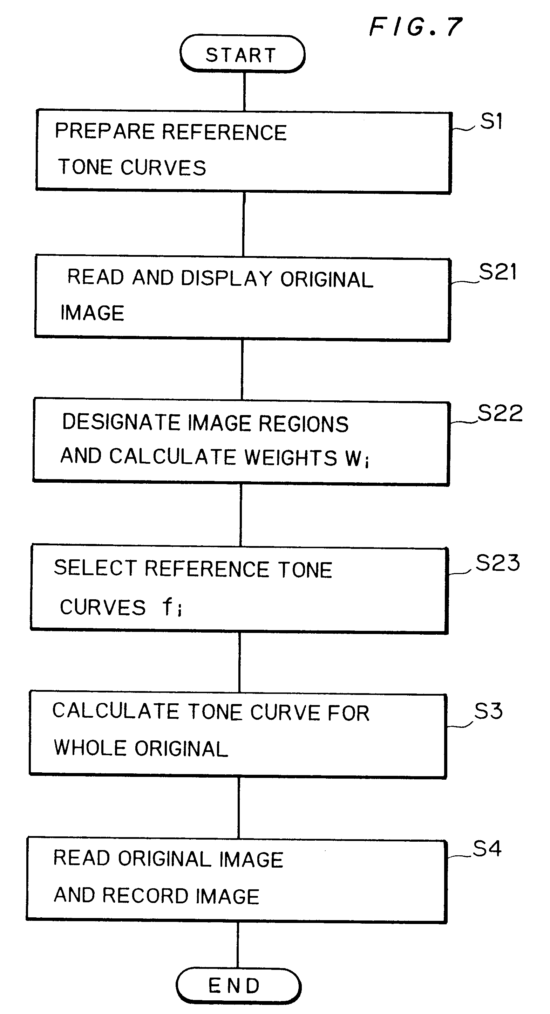

Fig. 7 is a flow chart showing the procedure of the preferred embodiment using the scanner system of Fig. 6. In Fig. 7, the process steps S1, S3 and S4 are similar to those of Fig. 2. Instead of the process step S2 of Fig. 2, the process steps S21 through S23 are executed.

In the process step S21, the input scanner 1 reads the original image, and the color monitor 8 displays the original image.

In the process step S22, the operator specifies the positions and sizes of the image regions $R_1$ and $R_2$ in the original image. For example, the operator specifies the center position of the image region $R_2$ while moving the cursor on the screen of the color monitor 8 by means of a mouse and the like, and specifies the radius value of the image region $R_2$ by means of a keyboard and the like. As a result, the inside of the circle defined by the specified center position and radius is specified as the image region $R_2$. Alternatively, the image region $R_2$ may be specified by tracing the contour line of the image region $R_2$ by means of a stylus pen and the like.

The CPU 51 calculates the ratio $A_2$:$A_1$ of the area $A_2$ of the image region $R_2$ thus specified to the area $A_1$ of the background region $R_1$, and the weights $W_1$ and $W_2$ in Equation (1) or the weight $\underline{a}$ in Equation (2) are determined such that the equality $W_2$:$W_1$ = $A_2$:$A_1$ or 1:a = $A_2$:$A_1$ holds. Alternatively, the ratio $A_2$:($A_1$+$A_2$) of the area $A_2$ of the image region $R_2$ to the area ($A_1$+$A_2$) of the whole original image may be used for determining the weights $W_1$ and $W_2$ (or $\underline{a}$).

In the process step S23, the reference tone curves $f_i$ appropriate to the respective regions in the original are selected. The selection is executed in the same manner as the selection of the reference tone curves in the process step S2 of Fig. 2.

If the weights $W_i$ (or $\underline{a}$) are determined according to the area ratio of the image regions $R_1$ and $R_2$ in the original image, as described above, even an unskilled operator can obtain the tone curve $f_d(x)$ appropriate to the original easily. Besides, the operator may change the weights $W_1$ and $W_2$ to appropriate values easily while observing the monitor image.

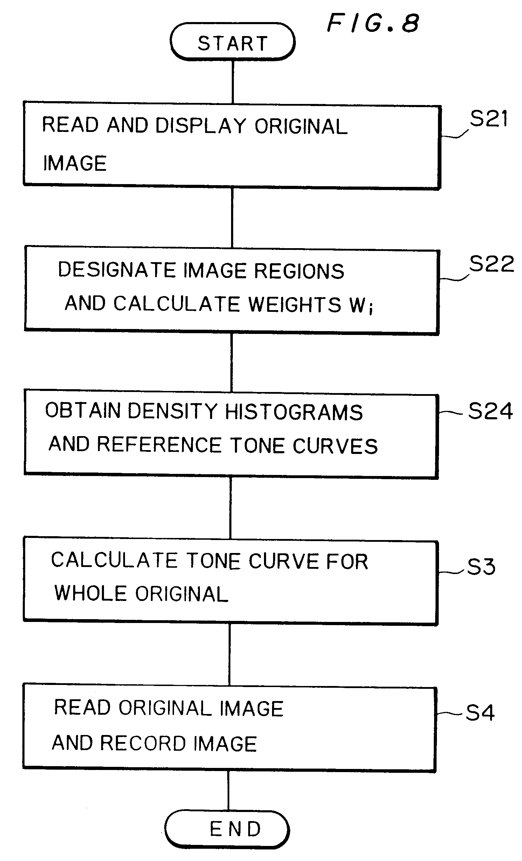

Fig. 8 is a flow chart showing the procedure of still another preferred embodiment using the scanner system of Fig. 6. In the procedure, the process steps S1 and S23 for preparing the reference tone curves in Fig. 6 are absent. Instead the process step S24 is inserted between the process steps S22 and S3.

In the process step S24, the CPU 51 produces each density histogram for the image regions $R_1$ and $R_2$ in the original image and produces the reference tone curves $f_1(x)$ and $f_2(x)$ appropriate to the image regions $R_1$ and $R_2$ respectively based on the density histograms. A method of finding the density histograms and the tone curves $f_1(x)$ and $f_2(x)$ based on the density histograms are disclosed, for example, in United States Patent No.4,792,979, which disclosure is incorporated herein. In the process step S3, based on the tone curves $f_1(x)$ and $f_2(x)$ thus found, a tone curve $f_d(x)$ appropriate to the whole original image is found according to Equation (1) or (2).

As disclosed in United States Patent No. US-A-4,792,979 (EP-A-0 255 949), the reference tone curves $f_1(x)$ and $f_2(x)$ may be found based on other statistical values representing the density distribution state of the original image than the density histogram.

According to the procedure of Fig. 8, there is no need for preparation of a large number of reference tone curves in advance. The reference tone curves appropriate to the respective image regions in the original image are not required to be selected by the operator, but are produced automatically. Therefore, an appropriate tone curve can be obtained independently of the operator's ability.

The present invention is applicable not only to a color scanner but also to a monochrome scanner.

In the above-mentioned preferred embodiments, the original image is divided into two image regions $R_1$ and $R_2$. However, the original image may be divided into three image regions or more. In general, when the original image is separated into m-number of image regions, where $\underline{m}$ is an integer larger than one, the tone curve $f_d(x)$ is calculated by means of the following equation instead of Equation (1):

$$f_d(x) = \sum_{i=1}^{m} W_i f_i(x) / (\sum_{i=1}^{m} W_i) \qquad \cdots (3)$$

Furthermore, the tone curve may be obtained by taking the whole image of the original as one image region and taking a specified portion included therein, e.g., the main subject portion, as another image region. When the whole image to be processed is divided into three image regions or more, for example, the weight of the background region may be set to zero.

## D. Conclusion

As described above, according to the present invention, an image is divided into a plurality of image regions, and reference tone curves appropriate to the respective image regions are determined and averaged with weights. When the tone of a partial image region is desired to be expressed particularly appropriately, a curve approximate to the reference tone curve suited to the partial image region is employed as a tone curve of the whole image. Therefore, the tone curve suitable for appropriately reproducing the tone of the partial region designated in the original image can be obtained easily.

## Claims

1. A method of obtaining a tone curve ($f_d(x)$) employable for converting gradation of an original image, characterised by the steps of:

(a) obtaining (S1) a plurality of reference tone curves (f(x))for a plurality of respective gradation characters;

(b) designating (S2 or S22) a plurality of image regions ($R_1$, $R_2$) on said original image;

(c) selecting (S2 or S23) respective reference tone curves ($f_1(x)$, $f_2(x)$) for said image regions ($R_1$, $R_2$) designated among said plurality of reference tone curves (f(x));

(d) designating (S2 or S22) weight values ($W_1$, $W_2$) for said respective reference tone curves ($f_1(x)$, $f_2(x)$); and

(e) combining (S3) said respective reference tone curves ($f_1(x)$, $f_2(x)$) in cooperation with said weight values ($W_1$, $W_2$) to thereby obtain said tone curve ($f_d(x)$)

2. The method of claim 1, wherein the step (a) comprises the step of:

(a-1) obtaining said plurality of reference tone curves (f(x)) for gradation characters of reference images (MT) each having different picture and different tone.

3. The method of claim 2, wherein the step (c) comprises the steps of:

(c-1) providing a menu table (MT) representing each said different picture and each said different tone;

(c-2) selecting a picture and a tone in said menu table (MT) for each of said plurality of image regions ($R_1$, $R_2$); and

(c-3) extracting a reference tone curve corresponding to said picture and said tone from said plurality of reference tone curves (f(x)) for each of said plurality of image regions ($R_1$, $R_2$) to thereby obtain said respective reference tone curves ($f_1(x)$, $f_2(x)$).

4. The method of any one of claims 1 to 3, wherein the step (b) comprises the step of:

(b-1) dividing said original image into said plurality of image regions ($R_1$, $R_2$).

5. The method of claim 4, wherein the step (b-1) comprises the steps of:

(b-1-1) displaying said original image on display means (52b); and

(b-1-2) defining boundaries between said plurality of image regions ($R_1$, $R_2$) on said displayed original image.

6. The method of claim 5, wherein the step (b-1-2) comprises the step of:

tracing said boundaries with cursor means.

7. The method of claim 6, wherein the step (b-1-2) comprises the steps of:

designating a center position of an image region ($R_2$) on said displayed original image;

designating a size of said image region ($R_2$); and

obtaining one of said plurality of image regions ($R_1$, $R_2$) as said image region ($R_2$) having said center position and said size.

8. The method of any preceding claim, wherein the step (d) comprises the steps of:

(d-1) selecting one image region ($R_1$) among said plurality of image regions ($R_1$, $R_2$);

(d-2) providing a first weight value ($W_1$) to said selected one image region ($R_1$); and

(d-3) providing second weight values ($W_2$) to image regions ($R_2$) not selected, where said first weight value ($W_1$) is larger than said second weight values ($W_2$).

9. The method of any one of claims 1 to 7, wherein the step (d) comprises the steps of:

(d-1) obtaining the ratio between respective areas ($A_1$, $A_2$) of said plurality of image regions ($R_1$, $R_2$); and

(d-2) determining said weight values ($W_1$, $W_2$) such that the ratio between said weight values ($W_1$, $W_2$) is equal to said ratio between said respective areas ($A_1$, $A_2$).

10. A method of obtaining a tone curve ($f_d(x)$) employable for converting gradation of an original image, characterised by the steps of:

(a) designating (S22) a plurality of image regions ($R_1$, $R_2$) on said original image;

(b) determining (S24) respective statistical distributions of density on said plurality of image regions ($R_1$, $R_2$);

(c) obtaining (S24) respective reference tone curves ($f_1(x)$, $f_2(x)$) for said plurality of image regions ($R_1$,

$R_2$) as a function of said respective statistical distributions;

(d) designating (S22) weight values ($W_1$, $W_2$) for said respective reference tone curves ($f_1(x)$, $f_2(x)$); and

(e) combining (S3) said respective reference tone curves ($f_1(x)$, $f_2(x)$) in cooperation with said weight values ($W_1$, $W_2$) to thereby obtain said tone curve ($f_d(x)$).

11. The method of claim 10, wherein the step (b) comprises the step of:

(b-1) obtaining respective density histograms on said plurality of image regions ($R_1$, $R_2$).

12. The method of claim 10 or 11, wherein the step (a) comprises the step of:

(a-1) dividing said original image into said plurality of image regions ($R_1$, $R_2$).

13. The method of claim 12, wherein the step (a-1) comprises the steps of:

(a-1-1) displaying said original image on display means (52b); and

(a-1-2) defining boundaries between said plurality of image regions ($R_1$, $R_2$) on said displayed original image.

14. The method of claim 13, wherein the step (a-1 -2) comprises the step of:

tracing said boundaries with cursor means.

15. The method of claim 14, wherein the step (a-1-2) comprises the steps of:

designating a center position of an image region ($R_2$) on said displayed original image;

designating a size of said image region ($R_2$); and

obtaining one of said plurality of image regions ($R_1$, $R_2$) as said image region ($R_2$) having said center position and said size.

16. The method of any one of claims 10 to 15, wherein the step (d) comprises the steps of:

(d-1) selecting one image region ($R_1$) among said plurality of image regions ($R_1$, R2);

(d-2) providing a first weight value ($W_1$) to said selected one image region ($R_1$); and

(d-3) providing second weight values ($W_2$) to image regions ($R_2$) not selected, where said first weight value ($W_1$) is larger than said second weight value ($W_2$).

17. The method of any one of claims 10 to 15, wherein the step (d) comprises the steps of:

(d-1) obtaining the ratio between respective areas ($A_1$-$A_2$) of said plurality of Image regions ($R_1$, $R_2$); and

(d-2) determining said weight values ($W_1$, $W_2$) such that the ratio between said weight values ($W_1$, $W_2$) is equal to said ratio between said respective areas ($A_1$, $A_2$).

18. An apparatus for obtaining a tone curve $f_d(x)$ employable for converting gradation of an original image, characterised by:

(a) means (56) for storing data with respect to a plurality of reference tone curves ($f(x)$) which are obtained for a plurality of respective gradation characters;

(b) means (52b) for displaying said original image;

(c) means (52) for designating a plurality of image regions ($R_1$, $R_2$) on said displayed original image;

(d) means (51, 54, 55) for selecting respective reference tone curves ($f_1(x)$, $f_2(x)$) for said plurality of image regions ($R_1$, $R_2$) among said plurality of reference tone curves ($f_1(x)$);

(e) means (52) for obtaining weight values ($W_1$, $W_2$) for said respective reference tone curves ($f_1(x)$, $f_2(x)$); and

(f) means (51) for obtaining a weighted average of data with respect to said respective reference tone curves ($f_1(x)$, $f_2(x)$) in cooperation with said weight values ($W_1$, $W_2$) to thereby obtain said tone curve.

19. The apparatus of claim 18, wherein the means (c) comprises:

(c-1) means (52) for dividing said original image into said plurality of Image regions ($R_1$, $R_2$).

20. The apparatus of claim 18 or 19, wherein the means (e) comprises:

(e-1) means (52a) for designating said weight values.

21. The apparatus of claim 18 or 19, wherein the means (e) comprises:

(e-1) means (52, 51) for obtaining the ratio between respective areas ($A_1$, $A_2$) of said plurality of image

regions ($R_1$, $R_2$); and

(e-2) means (52a, 51) for determining said weight values ($W_1$, $W_2$) such that the ratio between said weight values ($W_1$, $W_2$) is equal to said ratio between said respective areas ($A_1$, $A_2$).

**22.** An apparatus for obtaining a tone curve ($f_d(x)$) employable for converting gradation of an original image, characterised by:

(a) means (52b) for displaying said original image;

(b) means (52) for designating a plurality of image regions on said original image displayed;

(c) means (51) for determining respective statistical distributions of density on said plurality of image regions;

(d) means (51, 54, 55, 56) for obtaining data with respect to respective reference tone curves ($f_1(x)$, $f_2(x)$) for said plurality of image regions ($R_1$, $R_2$) as a function of said respective statistical distributions;

(e) means (51, 52) for obtaining weight values ($W_1$, $W_2$) for said respective reference tone curves ($f_1(x)$, $f_2(x)$); and

(f) means (51) for obtaining a weighted average of said data in cooperation with said weight values ($W_1$, $W_2$) to thereby obtain said tone curve ($f_d(x)$).

**23.** The apparatus of claim 22, wherein the means (b) comprises:

(b-1) means (52) for dividing said original image into said plurality of image regions ($R_1$, $R_2$).

**24.** The apparatus of claim 22 or 23, wherein the means (e) comprises:

(e-1) means (52a) for designating said weight values.

**25.** The apparatus of claim 22 or 23, wherein the means (e) comprises:

(e-1) means (52) for obtaining the ratio between respective areas ($A_1$, $A_2$) of said plurality of image regions ($R_1$, $R_2$); and

(e-2) means (51) for determining said weight values ($W_1$, $W_2$) such that a ratio between said weight values ($W_1$, $W_2$) is equal to said ratio between said respective areas ($A_1$, $A_2$).

**Patentansprüche**

**1.** Verfahren zum Erhalten einer Tonkurve ($f_d(x)$), das zum Umwandeln einer Abstufung eines Vorlagebildes benutzt werden kann, gekennzeichnet durch die Schritte:

(a) Erhalten (S1) einer Vielzahl von Referenztonkurven ($f(x)$) für eine Vielzahl jeweiliger Abstufungszeichen;

(b) Bezeichnen (S2 oder S22) einer Vielzahl von Bildbereichen ($R_1$, $R_2$) auf dem Vorlagebildes;

(c) Auswählen (S2 oder S23) jeweiliger Referenztonkurven ($f_1(x)$, $f_2(x)$) für die Bildbereiche ($R_1$, $R_2$), die unter der Vielzahl Referenztonkurven ($f(x)$) bezeichnet worden sind;

(d) Bezeichnen (S2 oder S22) von Gewichtswerten ($W_1$, $W_2$) für die jeweiligen Referenztonkurven ($f_1(x)$, $f_2(x)$); und

(e) Kombinieren (S3) der jeweiligen Referenztonkurven ($f_1(x)$, $f_2(x)$) im Zusammenwirken mit den Gewichtswerten ($W_1$, $W_2$), um dadurch die Tonkurve ($f_d(x)$) zu erhalten.

**2.** Verfahren nach Anspruch 1, bei dem Schritt (a) den Schritt aufweist:

(a-1)    Erhalten der Vielzahl von Referenztonkurven ($f(x)$) für die Abstufung von Zeichen von Referenzbildern (MT), die jeweils ein unterschiedliches Bild und einen unterschiedlichen Ton haben.

**3.** Verfahren nach Anspruch 2, indem der Schritt (c) die Schritte aufweist:

(c-1)    Vorsehen einer Menütabelle (MT), die jedes der unterschiedlichen Bilder und jedes der unterschiedlichen Töne darstellt;

(c-2)    Auswählen eines Bildes und eines Tones in der Menütabelle (MT) für jeden der Vielzahl der Bildbereiche ($R_1$, $R_2$); und

(c-3)    Ausziehen einer Referenztonkurve, die dem Bild und dem Ton entspricht, aus der Vielzahl der Referenztonkurven ($f(x)$) für jeden der Vielzahl der Bildbereiche ($R_1$, $R_2$), um somit die jeweiligen Referenztonkurven ($f_1(x)$, $f_2(x)$) zu erhalten.

4. Verfahren nach einem Ansprüche 1 bis 3, bei dem der Schritt (b) den Schritt aufweist:
(b-1)        Aufteilen des Vorlagebildes in die Vielzahl von Bildbereiche ($R_1$, $R_2$).

5. Verfahren nach Anspruch 4, bei dem der Schritt (b-1) die Schritte aufweist:
(b-1-1)        Anzeigen des Vorlagebildes auf Anzeigeeinrichtungen (52b); und
(b-1-2)        Definieren von Grenzen zwischen der Vielzahl von Bildbereichen ($R_1$, $R_2$) auf dem angezeigten Vorlagebild.

6. Verfahren nach Anspruch 5, bei dem der Schritt (b-1-2) den Schritt aufweist:
Abfahren der Grenzen mit Cursormitteln.

7. Verfahren nach Anspruch 6, bei dem der Schritt (b-1-2) die Schritte aufweist:
Bezeichnen einer Mittenposition eines Bildbereiches ($R_2$) auf dem angezeigten Vorlagebild;
Bezeichnen einer Größe des Bildbereiches ($R_2$); und
Erhalten eines der Vielzahl der Bildbereiche ($R_1$, $R_2$) als den Bildbereich ($R_2$) mit der Mittenposition und der Größe.

8. Verfahren nach einem der vorangehenden Ansprüche, bei dem der Schritt (d) die Schritte aufweist:
(d-1)        Auswählen eines Bildbereiches ($R_1$) aus der Vielzahl von Bildbereichen ($R_1$, $R_2$);
(d-2)        Vorsehen eines ersten Gewichtswertes ($W_1$) für den ausgewählten einen Bildbereich ($R_1$); und
(d-3)        Vorsehen zweiter Gewichtswerte ($W_2$) für Bildbereiche ($R_2$), die nicht ausgewählt sind, wobei der erste Gewichtswert ($W_1$) größer ist als die zweiten Gewichtswerte ($W_2$).

9. Verfahren nach einem der Ansprüche 1 bis 7, bei dem der Schritt (d) die Schritte aufweist:
(d-1)        Erhalten des Verhältnisses zwischen jeweiligen Flächen ($A_1$, $A_2$) der Vielzahl von Bildbereichen ($R_1$, $R_2$); und
(d-2)        Bestimmen der Gewichtswerte ($W_1$, $W_2$) derart, daß das Verhältnis der Gewichtswerten ($W_1$, $W_2$) gleich dem Verhältnis der jeweiligen Flächen ($A_1$, $A_2$) ist.

10. Verfahren zum Erhalten einer Tonkurve ($f_d(x)$), das zum Umwandeln der Abstufung eines Vorlagebildes benutzt werden kann, gekennzeichnet durch die Schritte:
(a) Bezeichnen (S22) einer Vielzahl von Bildbereichen ($R_1$, $R_2$) auf dem Vorlagebild;
(b) Bestimmen (S24) jeweiliger statistischer Verteilungen der Dichte auf der Vielzahl von Bildbereichen ($R_1$, $R_2$);
(c) Erhalten (S24) jeweiliger Referenztonkurven ($f_1(x)$, $f_2(x)$) für die Vielzahl von Bildbereichen ($R_1$, $R_2$) als eine Funktion der jeweiligen statistischen Verteilungen;
(d) Bezeichnen (S22) von Gewichtswerten ($W_1$, $W_2$) für die jeweiligen Referenztonkurven ($f_1(x)$, $f_2(x)$); und
(e) Kombinieren (S3) der jeweiligen Referenztonkurven ($f_1(x)$, $f_2(x)$) im Zusammenwirken mit den Gewichtswerten ($W_1$, $W_2$), um somit die Tonkurve ($f_d(x)$) zu erhalten.

11. Verfahren nach Anspruch 10, bei dem der Schritt (b) den Schritt aufweist:
(b-1)        Erhalten jeweiliger Dichtehistogramme auf der Vielzahl von Bildbereichen ($R_1$, $R_2$).

12. Verfahren nach Anspruch 10 oder 11, bei dem der Schritt (a) den Schritt aufweist:
(a-1)        Aufteilen des Vorlagebildes in die Vielzahl von Bildbereiche ($R_1$, $R_2$).

13. Verfahren nach Anspruch 12, bei dem der Schritt (a-1) die Schritte aufweist:
(a-1-1)        Anzeigen des Vorlagebildes auf Anzeigeeinrichtungen (52b); und
(a-1-2)        Definieren von Grenzen zwischen der Vielzahl von Bildbereichen ($R_1$, $R_2$) auf dem angezeigten Vorlagebild.

14. Verfahren nach Anspruch 13, bei dem der Schritt (a-1-2) den Schritt aufweist:
Abfahren der Grenzen mit Cursormitteln.

15. Verfahren nach Anspruch 14, bei dem der Schritt (a-1-2) die Schritte aufweist:
Bezeichnen einer Mittenposition eines Bildbereiches ($R_2$) auf dem angezeigten Vorlagebild;

EP 0 424 920 B1

Bezeichnen einer Größe des Bildbereiches ($R_2$); und

Erhalten eines der Vielzahl der Bildbereiche ($R_1$, $R_2$) als den Bildbereich ($R_2$) mit der Mittenposition und der Größe.

16. Verfahren nach einem der Ansprüche 10 bis 15, bei dem der Schritt (d) die Schritte aufweist:

(d-1)   Auswählen eines Bildbereiches ($R_1$) aus der Vielzahl der Bildbereiche ($R_1$, $R_2$);

(d-2)   Vorsehen eines ersten Gewichtswertes ($W_1$) für den ausgewählten einen Bereich ($R_1$); und

(d-3)   Vorsehen zweiter Gewichtswerte ($W_2$) für Bildbereiche ($R_2$), die nicht ausgewählt sind, wobei der erste Gewichtswert ($W_1$) größer ist als der zweite Gewichtswert ($W_2$).

17. Verfahren nach einem der Ansprüche 10 bis 15, bei dem der Schritt (d) die Schritte aufweist:

(d-1)   Erhalten des Verhältnisses zwischen jeweiligen Flächen ($A_1$-$A_2$) der Vielzahl von Bildbereichen ($R_1$, $R_2$); und

(d-2)   Bestimmen der Gewichtswerte ($W_1$, $W_2$) derart, daß das Verhältnis der Gewichtswerte ($W_1$, $W_2$) gleich dem Verhältnis der jeweiligen Flächen ($A_1$, $A_2$) ist.

18. Vorrichtung zum Erhalten einer Tonkurve $f_d(x)$, die zum Umwandeln der Abstufung eines Vorlagebildes benutzt werden kann, gekennzeichnet durch:

(a) eine Einrichtung (56) zum Speichern von Daten in bezug auf eine Vielzahl von Referenztonkurven ($f(x)$), die für eine Vielzahl von jeweiligen Abstufungszeichen erhalten worden sind;

(b) eine Einrichtung (52b) zum Anzeigen des Vorlagebildes;

(c) eine Einrichtung (52) zum Bezeichnen einer Vielzahl von Bildbereichen ($R_1$, $R_2$) auf dem angezeigten Vorlagebild;

(d) eine Einrichtung (51, 54, 55) zum Auswählen jeweiliger Referenztonkurven ($f_1(x)$, $f_2(x)$) für die Vielzahl der Bildbereiche ($R_1$, $R_2$) aus der Vielzahl der Referenztonkurven ($f_1(x)$);

(e) eine Einrichtung (52) zum Erhalten von Gewichtswerten ($W_1$, $W_2$) für die jeweiligen Referenztonkurven ($f_1(x)$, $f_2(x)$); und

(f) eine Einrichtung (51) zum Erhalten eines gewichteten Mittelwertes der Daten in bezug auf die jeweiligen Referenztonkurven ($f_1(x)$, $f_2(x)$) im Zusammenwirken mit den Gewichtswerten ($W_1$, $W_2$), um somit die Tonkurve zu erhalten.

19. Vorrichtung nach Anspruch 18, bei der die Einrichtung (c) aufweist:

(c-1)   eine Einrichtung (52) zum Aufteilen des Vorlagebildes in die Vielzahl von Bildbereichen ($R_1$, $R_2$).

20. Vorrichtung nach Anspruch 18 oder 19, bei der die Einrichtung (e) aufweist:

(e-1)   eine Einrichtung (52a) zum Bezeichnen der Gewichtswerte.

21. Vorrichtung nach Anspruch 18 oder 19, bei der die Einrichtung (e) aufweist:

(e-1)   eine Einrichtung (52, 51) zum Erhalten des Verhältnisses zwischen jeweiligen Flächen ($A_1$, $A_2$) der Vielzahl von Bildbereichen ($R_1$, $R_2$); und

(e-2)   eine Einrichtung (52a, 51) zum Bestimmen der Gewichtswerte ($W_1$, $W_2$) derart, daß das Verhältnis der Gewichtswerte ($W_1$, $W_2$) gleich dem Verhältnis der jeweiligen Flächen ($A_1$, $A_2$) ist.

22. Vorrichtung zum Erhalten einer Tonkurve ($f_d(x)$), die zum Umwandeln der Abstufung eines Vorlagebildes benutzt werden kann, gekennzeichnet durch:

(a) eine Einrichtung (52b) zum Anzeigen des Vorlagebildes;

(b) eine Einrichtung (52) zum Bezeichnen einer Vielzahl von Bildbereichen auf dem angezeigten Vorlagebild;

(c) eine Einrichtung (51) zum Bestimmen jeweiliger statistischer Verteilungen der Dichte der Vielzahl von Bildbereichen;

(e) eine Einrichtung (51, 54, 55, 56) zum Erhalten von Daten in bezug auf jeweilige Referenztonkurven ($f_1(x)$, $f_2(x)$) für die Vielzahl von Bildbereichen ($R_1$, $R_2$) als eine Funktion der jeweiligen statistischen Verteilungen;

(e) eine Einrichtung (51, 52) zum Erhalten von Gewichtswerten ($W_1$, $W_2$) für die jeweiligen Referenztonkurven ($f_1(x)$ , $f_2(x)$) ; und

(f) eine Einrichtung (51) zum Erhalten eines gewichteten Mittelwertes der Daten im Zusammenwirken mit den Gewichtswerten ($W_1$, $W_2$), um somit die Tonkurve ($f_d(x)$) zu erhalten.

10

**23.** Vorrichtung nach Anspruch 22, bei der die Einrichtung (b) aufweist:

(b-1) eine Einrichtung (52) zum Aufteilen des Vorlagebildes in die Vielzahl von Bildbereichen ($R_1$, $R_2$).

**24.** Vorrichtung nach Anspruch 22 oder 23, bei der die Einrichtung (e) aufweist:

(e-1) eine Einrichtung (52a) zum Bezeichnen der Gewichtswerte.

**25.** Vorrichtung nach Anspruch 22 oder 23, bei der die Einrichtung (e) aufweist:

(e-1) eine Einrichtung (52) zum Erhalten des Verhältnisses zwischen den jeweiligen Flächen ($A_1$, $A_2$) der Vielzahl von Bildbereichen ($R_1$, $R_2$); und

(e-2) eine Einrichtung (51) zum Bestimmen der Gewichtswerte ($W_1$, $W_2$) derart, daß ein Verhältnis der Gewichtswerte ($W_1$, $W_2$) gleich dem Verhältnis der jeweiligen Flächen ($A_1$, $A_2$) ist.

## Revendications

**1.** Procédé pour l'obtention d'une courbe de tons ($f_d(x)$) pouvant être employée pour convertir la gradation d'une image originale, caractérisé par les étapes consistant à :

(a) obtenir (S1) une pluralité de courbes de tons de référence ($f(x)$) pour une pluralité de caractères de gradation respectifs ;

(b) désigner (S2 ou S22) une pluralité de zones d'image ($R_1$, $R_2$) sur ladite image originale ;

(c) sélectionner (S2 ou S23) des courbes de tons de référence respectives ($f_1(x)$, $f_2(x)$) pour lesdites zones d'image ($R_1$, R2) désignées parmi ladite pluralité de courbes de tons de référence ($f(x)$) ;

(d) désigner (S2 ou S22) des valeurs pondérées ($W_1$, $W_2$) pour lesdites courbes de tons de référence respectives ($f_1(x)$, $f_2(x)$) ; et

(e) combiner (S3) lesdites courbes de tons de référence respectives ($f_1(x)$, $f_2(x)$) conjointement avec lesdites valeurs pondérées ($W_1$, $W_2$) afin d'obtenir ainsi ladite courbe de tons ($f_d(x)$).

**2.** Procédé selon la revendication 1, dans lequel l'étape (a) inclut l'étape consistant à:

(a-1) obtenir ladite pluralité de courbes de tons de référence ($f(x)$) pour des caractères de gradation d'images de référence (MT) ayant chacune une image différente et un ton différent.

**3.** Procédé selon la revendication 2, dans lequel l'étape (c) inclut les étapes consistant à:

(c-1) réaliser un tableau de menu (MT) représentant chaque dite image différente et chaque dit ton différent ;

(c-2) sélectionner une image et un ton dans ledit tableau de menu (MT) pour chacune de ladite pluralité de zones d'image ($R_1$, $R_2$) ; et

(c-3) extraire une courbe de tons de référence correspondant à ladite image et audit ton à partir de ladite pluralité de courbes de tons de référence ($f(x)$) pour chacune de ladite pluralité de zones d'image ($R_1$, $R_2$) afin d'obtenir ainsi lesdites courbes de tons de référence respectives ($f_1(x)$, $f_2(x)$).

**4.** Procédé selon l'une quelconque des revendications 1 à 3, dans lequel l'étape (b) inclut l'étape consistant à :

(b-1) diviser ladite image originale en ladite pluralité de zones d'image ($R_1$, $R_2$).

**5.** Procédé selon la revendication 4, dans lequel l'étape (b-1) inclut les étapes consistant à :

(b-1-1) afficher ladite image originale sur des moyens d'affichage (52b) ; et

(b-1-2) définir des limites entre ladite pluralité de zones d'image ($R_1$, $R_2$) sur ladite image originale affichée.

**6.** Procédé selon la revendication 5, dans lequel l'étape (b-1-2) inclut l'étape consistant à :

tracer lesdites limites à l'aide de moyens à curseur.

**7.** Procédé selon la revendication 6, dans lequel l'étape (b-1-2) inclut les étapes consistant à :

désigner une position centrale d'une zone d'image ($R_2$) sur ladite image originale affichée ;

désigner une dimension de ladite zone d'image ($R_2$) ; et

obtenir une de ladite pluralité de zones d'image ($R_1$, $R_2$) en tant que dite zone d'image ($R_2$) ayant ladite position centrale et ladite dimension.

**8.** Procédé selon l'une quelconque des revendications précédentes, dans lequel l'étape (d) inclut les étapes consistant à :

(d-1) sélectionner une zone d'image $(R_1)$ parmi ladite pluralité de zones d'image $(R_1, R_2)$ ;

(d-2) fournir une première valeur pondérée $(W_1)$ à ladite zone d'image $(R_1)$ sélectionnée ; et

(d-3) fournir des secondes valeurs pondérées $(W_2)$ aux zones d'image $(R_2)$ non sélectionnées, ladite première valeur pondérée $(W_1)$ étant supérieure auxdites secondes valeurs pondérées $(W_2)$.

**9.** Procédé selon quelconque des revendications 1 à 7, dans lequel l'étape (d) inclut les étapes consistant à :

(d-1) obtenir le rapport entre les aires respectives (A1, A2) de ladite pluralité de zones d'image $(R_1, R_2)$ ; et

(d-2) déterminer lesdites valeurs pondérées $(W_1, W_2)$ telles que le rapport entre lesdites valeurs pondérées $(W_1, W_2)$ est égal audit rapport entre lesdites aires respectives (A1, A2).

**10.** Procédé pour l'obtention d'une courbe de tons $(f_d(x))$ pouvant être employée pour convertir la gradation d'une image originale, caractérisé par les étapes consistant à :

(a) désigner (S22) une pluralité de zones d'image $(R_1, R_2)$ sur ladite image originale ;

(b) déterminer (S24) les distributions statistiques respectives de densité sur ladite pluralité de zones d'image $(R_1, R_2)$ ;

(c) obtenir (S24) des courbes de tons de référence respectives $(f_1(x), f_2(x))$ pour ladite pluralité de zones d'image $(R_1, R_2)$ en tant que fonction desdites distributions statistiques respectives ;

(d) désigner (S22) des valeurs pondérées $(W_1, W_2)$ pour lesdites courbes de tons de référence respectives $(f_1(x), f_2(x))$ ; et

(e) combiner (S3) lesdites courbes de tons de référence respectives $(f_1(x), f_2(x))$ conjointement avec lesdites valeurs pondérées $(W_1, W_2)$ afin d'obtenir ainsi ladite courbe de tons $(f_d(x))$.

**11.** procédé selon la revendication 10, dans lequel l'étape (b) inclut l'étape consistant à :

(b-1) obtenir des histogrammes respectifs de densité sur ladite pluralité de zones d'image $(R_1, R_2)$.

**12.** Procédé selon la revendication 10 ou 11, dans lequel l'étape (a) inclut l'étape consistant à :

(a-1) diviser ladite image originale en ladite pluralité de zones d'image $(R_1, R_2)$.

**13.** Procédé selon la revendication 12, dans lequel l'étape (a-1)-inclut les étapes consistant à :

(a-1-1) afficher ladite image originale sur des moyens d'affichage (52b) ; et

(a-1-2) définir des limites entre ladite pluralité de zones d'image $(R_1, R_2)$ sur ladite image originale affichée.

**14.** Procédé selon la revendication 13, dans lequel l'étape (a-1-2) inclut l'étape consistant à :

tracer lesdites limites à l'aide de moyens à curseur.

**15.** Procédé selon la revendication 14, dans lequel l'étape (a-1-2) inclut l'étape consistant à :

désigner une position centrale d'une zone d'image $(R_2)$ sur ladite image originale affichée ;

désigner une dimension de ladite zone d'image $(R_2)$ ; et

obtenir une de ladite pluralité de zones d'image $(R_1, R_2)$ en tant que dite zone d'image $(R_2)$ ayant ladite position centrale et ladite dimension.

**16.** Procédé selon l'une quelconque des revendications 10 à 15, dans lequel l'étape (d) inclut les étapes consistant à :

(d-1) sélectionner une zone d'image $(R_1)$ parmi ladite pluralité de zones d'image $(R_1, R_2)$ ;

(d-2) fournir une première valeur pondérée $(W_1)$ à ladite zone d'image $(R_1)$ sélectionnée ; et

(d-3) fournir des secondes valeurs pondérées $(W_2)$ aux zones d'image $(R_2)$ non sélectionnées, ladite première valeur pondérée $(W_1)$ étant supérieure à ladite seconde valeur pondérée $(W_2)$.

**17.** Procédé selon l'une quelconque des revendications 10 à 15, dans lequel l'étape (d) inclut les étapes consistant à :

(d-1) obtenir le rapport entre les aires respectives (A1, A2) de ladite pluralité de zones d'image $(R_1, R_2)$ ; et

(d-2) déterminer lesdites valeurs pondérées $(W_1, W_2)$ telles que le rapport entre lesdites valeurs pon-

dérées ($W_1$, $W_2$) est égal audit rapport entre lesdites aires respectives (A1, A2).

18. Appareil pour l'obtention d'une courbe de tons ($f_d(x)$) pouvant être employée pour convertir la gradation d'une image originale, caractérisé par :

(a) des moyens (56) pour stocker des données relatives à des courbes de tons de référence ($f_d(x)$) qui sont obtenues pour une pluralité de caractères de gradation respectifs ;

(b) des moyens (52b) pour afficher ladite image originale ;

(c) des moyens (52) pour désigner une pluralité de zones d'image ($R_1$, $R_2$) sur ladite image originale affichée ;

(d) des moyens (51, 54, 55) pour sélectionner des courbes de tons de référence respectives ($f_1(x)$, $f_2(x)$) pour ladite pluralité de zones d'image ($R_1$, $R_2$) parmi ladite pluralité de courbes de tons de référence ($f1(x)$) ;

(e) des moyens (52) pour obtenir des valeurs pondérées ($W_1$, $W_2$) pour lesdites courbes de tons de référence ($f_1(x)$, $f_2(x)$) ; et

(f) des moyens (51) pour obtenir une moyenne pondérée des données relatives auxdites courbes de tons de référence respectives ($f_1(x)$, $f_2(x)$) conjointement avec lesdites valeurs pondérées ($W_1$, $W_2$) afin d'obtenir ainsi ladite courbe de tons.

19. Appareil selon la revendication 18, dans lequel les moyens (c) comprennent :

(c-1) des moyens (52) pour diviser ladite image originale en ladite pluralité de zones d'image ($R_1$, $R_2$).

20. Appareil selon la revendication 18 ou 19, dans lequel les moyens (e) comprennent :

(e-1) des moyens (52a) pour désigner lesdites valeurs pondérées.

21. Appareil selon la revendication 18 ou 19, dans lequel les moyens (e) comprennent :

(e-1) des moyens (52, 51) pour obtenir le rapport entre les aires respectives (A1, A2) de ladite pluralité de zones d'image ($R_1$, $R_2$) ; et

(e-2) des moyens (52a, 51) pour déterminer lesdites valeurs pondérées ($W_1$, $W_2$) telles que le rapport entre lesdites valeurs pondérées ($W_1$, $W_2$) est égal audit rapport entre lesdites aires respectives (A1, A2).

22. Appareil pour l'obtention d'une courbe de tons ($f_d(x)$) pouvant être employée pour convertir la gradation d'une image originale, caractérisé par :

(a) des moyens (52b) pour afficher ladite image originale ;

(b) des moyens (52) pour désigner une pluralité de zones d'image sur ladite image originale affichée ;

(c) des moyens (51) pour déterminer les distributions statistiques respectives de densité sur ladite pluralité de zones d'image ;

(d) des moyens (51, 54, 55, 56) pour obtenir des données relatives aux courbes de tons de référence respectives ($f_1(x)$, $f_2(x)$) pour ladite pluralité de zones d'image ($R_1$, $R_2$) en tant que fonction desdites distributions statistiques respectives ;

(e) des moyens.(51, 52) pour obtenir des valeurs pondérées ($W_1$, $W_2$) pour lesdites courbes de tons de référence respectives ($f_1(x)$, $f_2(x)$) ; et

(f) des moyens (51) pour obtenir une moyenne pondérée desdites données conjointement avec lesdites valeurs pondérées ($W_1$, $W_2$) afin d'obtenir ainsi ladite courbe de tons ($f_d(x)$).

23. Appareil selon la revendication 22, dans lequel les moyens (b) comprennent :

(b-1) des moyens (52) pour diviser ladite image originale en ladite pluralité de zones d'image ($R_1$, $R_2$).

24. Appareil selon la revendication 22 ou 23, dans lequel les moyens (e) comprennent :

(e-1) des moyens (52a) pour désigner lesdites valeurs pondérées.

25. Appareil selon la revendication 22 ou 23, dans lequel les moyens (e) comprennent :

(e-1) des moyens (52) pour obtenir le rapport entre les aires respectives ($A_1$, $A_2$) de ladite pluralité de zones d'image ($R_1$, $R_2$) ; et

(e-2) des moyens (51) pour déterminer lesdites valeurs pondérées ($W_1$, $W_2$) telles que le rapport entre lesdites valeurs pondérées ($W_1$, $W_2$) est égal audit rapport entre lesdites aires respectives (A1, A2).

FIG.1

*FIG.2*

START

PREPARE REFERENCE
TONE CURVES — S1

SELECT REFERENCE TONE
CURVES  $f_i$  AND DESIGNATE
WEIGHTS   $W_i$ — S2

CALCULATE TONE CURVE FOR
WHOLE ORIGINAL IMAGE — S3

READ ORIGINAL IMAGE
AND RECORD IMAGE — S4

END

## FIG.3

$$f_d(x) = \frac{W_1 f_1(x) + W_2 f_2(x)}{W_1 + W_2}$$

OR

$$f_d(x) = (1-a) f_1(x) + a f_2(x)$$

OUTPUT DENSITY

INPUT DENSITY

## FIG.5

## F I G. 4

MT

| | | | |
|---|---|---|---|
| PORTRAIT (HIGH KEY) | PORTRAIT (STANDARD) | PORTRAIT (LOW KEY) | --- |
| MACHINE (HIGH KEY) | MACHINE (STANDARD) | MACHINE (LOW KEY) | --- |
| LANDSCAPE (HIGH KEY) | LANDSCAPE (STANDARD) | LANDSCAPE (LOW KEY) | --- |
| --- | --- | --- | --- |

FIG.6

*FIG.7*

```
        ┌─────────┐
        │  START  │
        └─────────┘
             │
   ┌─────────────────────┐
   │ PREPARE REFERENCE   │── S1
   │  TONE CURVES        │
   └─────────────────────┘
             │
   ┌─────────────────────┐
   │ READ AND DISPLAY    │── S21
   │ ORIGINAL IMAGE      │
   └─────────────────────┘
             │
   ┌─────────────────────┐
   │ DESIGNATE IMAGE     │── S22
   │ REGIONS AND         │
   │ CALCULATE WEIGHTS Wᵢ│
   └─────────────────────┘
             │
   ┌─────────────────────┐
   │ SELECT REFERENCE    │── S23
   │ TONE CURVES  fᵢ     │
   └─────────────────────┘
             │
   ┌─────────────────────┐
   │ CALCULATE TONE      │── S3
   │ CURVE FOR WHOLE     │
   │ ORIGINAL            │
   └─────────────────────┘
             │
   ┌─────────────────────┐
   │ READ ORIGINAL IMAGE │── S4
   │ AND RECORD IMAGE    │
   └─────────────────────┘
             │
        ┌─────────┐
        │   END   │
        └─────────┘
```

DESIGNATE IMAGE REGIONS AND CALCULATE WEIGHTS $W_i$

SELECT REFERENCE TONE CURVES $f_i$

## FIG.8

```
        ( START )

┌─────────────────────────────┐
│ READ AND DISPLAY ORIGINAL   │──── S21
│ IMAGE                       │
└─────────────────────────────┘

┌─────────────────────────────┐
│ DESIGNATE IMAGE REGIONS     │──── S22
│  AND CALCULATE WEIGHTS Wi   │
└─────────────────────────────┘

┌─────────────────────────────┐
│ OBTAIN DENSITY HISTOGRAMS   │──── S24
│ AND REFERENCE TONE CURVES   │
└─────────────────────────────┘

┌─────────────────────────────┐
│ CALCULATE TONE CURVE FOR    │──── S3
│ WHOLE ORIGINAL              │
└─────────────────────────────┘

┌─────────────────────────────┐
│ READ ORIGINAL IMAGE         │──── S4
│ AND RECORD IMAGE            │
└─────────────────────────────┘

         ( END )
```